(19) Europäisches Patentamt
European Patent Office
Office européen des brevets

(11) **EP 1 060 132 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
*C02F 3/00* (2006.01)          *B01D 21/32* (2006.01)
*G01N 15/04* (2006.01)        *G01F 23/292* (2006.01)

(21) Anmeldenummer: **99904616.2**

(22) Anmeldetag: **26.02.1999**

(86) Internationale Anmeldenummer:
**PCT/AT1999/000050**

(87) Internationale Veröffentlichungsnummer:
**WO 1999/043621 (02.09.1999 Gazette 1999/35)**

(54) **VERFAHREN ZUR STEUERUNG VON BIOLOGISCHEN ABWASSERKLÄRANLAGEN**

METHOD FOR CONTROLLING BIOLOGICAL WASTE PURIFICATION PLANTS

PROCEDE DE REGULATION DU FONCTIONNEMENT DE STATIONS D'EPURATION BIOLOGIQUES

(84) Benannte Vertragsstaaten:
**AT BE CH DE DK ES FI FR GB LI NL SE**

(30) Priorität: **26.02.1998 AT 35098**

(43) Veröffentlichungstag der Anmeldung:
**20.12.2000 Patentblatt 2000/51**

(73) Patentinhaber: **Staudinger, Gernot, Dipl.-Ing. Dr.
A-8042 Graz (AT)**

(72) Erfinder:
• **STAUDINGER, Gernot
A-8042 Graz (AT)**
• **FUCHS, Andreas
A-8010 Graz (AT)**

(74) Vertreter: **Itze, Peter et al
Patentanwälte
Casati, Wilhelm, Dipl.-Ing.
Itze, Peter, Dipl.-Ing.
Amerlingstrasse 8
1061 Wien (AT)**

(56) Entgegenhaltungen:
**DE-A- 4 331 505          US-A- 4 099 871
US-A- 4 168 233          US-A- 4 313 340
US-A- 5 431 037**

• **PATENT ABSTRACTS OF JAPAN vol. 006, no. 038 (P-105), 9. März 1982 & JP 56 155815 A (MITSUBISHI ELECTRIC CORP), 2. Dezember 1981**

**Beschreibung**

Die Erfindung betrifft ein Verfahren zur Regelung von biologischen Abwasserkläranlagen, insbesondere solchen mit Belebungsbecken und damit verbundenen Nachklärbecken, bei dem einem Sedimentationsgefäß Schlamm zugeführt und aus dem sich im Sedimentationsgefäß bildenden Überstand durch Transparenzmessung Meßdaten zur Regelung der Abwasserkläranlage ermittelt werden.

Durch die DE 43 31 505 A1 wurde ein Verfahren und eine Vorrichtung zum Ermitteln und Regeln der Feststofflconzentration in einem Belebtschlammbecken einer biologischen Kläranlage bekannt. Dabei wird eine Probemenge Abwasser-Belebtschlammgemisch mit einer Menge klaren Wassers in einen Meßzylinder eingefüllt und über eine ortsfest am Meßzylinder positionierte Meßeinrichtung die Lage der Grenzschicht zwischen Belebtschlamm und überstehender Flüssigkeit nach vorgegebener Meßzeit bestimmt. Mit der Meßeinrichtung wird die Intensität des Lichtstroms durch ein das Meßgut aufnehmendes Meßgefäß ermittelt. Dadurch kann die Lage der Trennschicht zwischen Belebtschlamm und klarer, überstehender Flüssigkeit nach vorgegebener Meßzeit bestimmt werden. Liegt die Trennschichtebene nach dem Meßzeitablauf, oberhalb der vorgegebenen Referenzposition, wird Überschußschlamm aus dem Belebtschlammbecken abgezogen und die Rücklaufschlammenge entweder kleingehalten oder auf null gefahren. Liegt die Trennschicht hingegen nach der Referenzzeit unterhalb der vorgegebenen Referenzebene, muß dem Belebtschlammbecken eine zusätzliche Menge Rücklaufschlamm zugeführt werden und gleichzeitig die Abfuhr von Überschußschlamm gestoppt werden.

Durch die US 40 99 871A wurde ein Verfahren zur Bestimmung des Schlammvolumenindex als Kriterium für eine wirkungsvolle und rasche Trennung des aktivierten Schlammes vom behandelten Wasser bekannt. Hiebei werden elektrische Signale, die ein Maß für die Intensität eines Lichtstrahles sind, der ein mit der Schlammprobe gefülltes Sedimentationsgefäß einer Lichtschranke durchsetzt, in einem Rechner verarbeitet.

In Belebungsanlagen ist die Nachklärung zur Trennung des gereinigten Abwassers von der suspendierten Biomasse der für den Reinigungserfolg entscheidende Verfahrensschritt. Die Qualität der Abtrennung der Biomasse wird dabei von der Absetzgeschwindigkeit des sichtbaren Schlammspiegels, sowie von der Resttrübung des Klarwasserüberstandes bestimmt.

Im Routinebetrieb von Klärwerken wird das Schlammvolumen als ein Maß für die Absetzgeschwindigkeit einmal pro Tag bestimmt. Die verbleibende Resttrübe im gereinigten Abwasser über dem Schlammspiegel wird allerdings nicht erfaßt. Durch die Anwendung der Transmissionstrübemessung, ist sowohl die Messung der Absetzgeschwindigkeit als auch die Bestimmung des zeitlichen Verlaufes der Resttrübung in der Klarwasserzone über dem Schlammspiegel möglich.

Die Regelung von biologischen Abwasserkläranlagen und damit das Ergebnis des Klärvorganges hängt, außer von der Bauweise der Anlage, von einer größeren Anzahl von Parametern ab, die zu einem Teil beeinflußbar sind, zum anderen Teil dies jedoch nicht -sind. Nicht beeinflußbar ist z.B. die Wettersituation, die Temperatur, die Beladung und die Zusammensetzung des Zulaufes. Im Einflußbereich des Betreibers liegt jedoch das Schlammmanagement (Schlammalter, Rücklaufverhältnis und Trockensubstanzgehalt), der Sauerstoffgehalt in der Belebung und die Zulaufmenge; diese kann wenigstens tageweise durch Rückhaltebecken auf einem mittleren Niveau gehalten werden.

Wenn dem Klärwärter ausreichende Informationen über den Betriebszustand der Kläranlage zur Verfügung stehen und ihm der Zusammenhang zwischen Eingangs- und Ausgangsgrößen bekannt ist, dann kann er durchaus in den Betrieb der Kläranlage eingreifen, um - entweder a) die Reinheit des ablaufenden Wassers zu optimieren, oder b) die Betriebskosten der Anlage zu minimieren.

In der Praxis sind jedoch bei den meisten Kläranlagen nicht genügend Informationen vorhanden und auch der Zusammenhang zwischen Eingangs- und Ausgangsgrößen ist nur sehr beschränkt bekannt. Wiewohl die Funktion der Gesamtanlage aufgrund von Kenngrößen des Ablaufwassers nach dem Nachklärbecken beurteilt wird, sind diese Ablaufkennwerte jedoch nur beschränkt für die Regelung der Anlage brauchbar wie die Praxis zeigt, weil:

-    Die Verweilzeit im Nachklärbecken bis zu 5 Stunden beträgt, die Störgrößen auf der Eingangsseite sich erfahrungsgemäß bereits innerhalb einer Stunde wesentlich ändern, sodaß jede Maßnahme, die aufgrund von Ausgangsmeßwerten getroffen wird, zu spät kommt.

-    Die Strömungsverhältnisse in den Nachklärbecken verschiedener Bauart unbekannt und obendrein vom Durchsatz und der Schlammbewirtschaftung abhängig sind.

Es ist also ausgeschlossen, ausschließlich aus den Ablaufwerten einer Kläranlage rechtzeitige und wahre Information über den Zustand des Belebtschlammes am Ausgang der Belebung zu erhalten. Dies wäre aber äußerst wichtig, weil es nach der Belebung keine weitere Möglichkeit zur Beeinflussung des Belebtschlammes mehr gibt.

Dieses Problem einer Lösung zuzuführen, ist Aufgabe der Erfindung. Beobachtungen eines in einer Küvette sedimentierenden Klärschlammes zeigten, daß sich direkt oberhalb des Schlammspiegels eine wenige Millimeter hohe Zone ausbildet, deren Transparenz größer ist als im darüber befindlichen "Klarwasser" des Überstandes.

Die Größe des so entstehenden "Peaks" im zeitlichen Verlauf der Transparenz an einem Durchstrahlungsort hängt mit der Trennbarkeit von Wasser und Feststoffen zusammen. Es wurde nämlich auch beobachtet, daß Schlämme, welche einen ausgeprägten "Peak" aufweisen, in der Regel ein saubereres Klarwasser produzieren als solche ohne "Peak". Der "Peak" korreliert mit der aus dem Sedimentationsvorgang resultierenden Transparenz des Klarwassers und ist ein Maß für die Tendenz der Lebewesen, im Schlamm ein Netzwerk aufzubauen, welches durchströmendes Wasser filtriert.

Durch die Erfindung soll nun ein Verfahren der eingangs erwähnten Art so gestaltet werden, daß der "Peak" hinsichtlich seiner zeitlichen Lage und Größe verfolgt und bestimmt werden kann, was in einem Regelungsverfahren der eingangs erwähnten Art dadurch erreicht wird, daß erfindungsgemäß die Transparenz des Überstandes als Funktion der Zeit ermittelt wird und hiebei mindestens eine Lichtschranke eingesetzt wird, mit einem Strahlenbündel, das das Sedimentationsgefäß quer zur Sedimentationsrichtung durchsetzt, und einem Sensor, auf den das Strahlenbündel nach Durchsetzen der Küvette auftrifft, daß zur Ermittlung eines Peaks (abrupte Zu- und Abnahme der Transparenz) im zeitlichen Verlauf der Sedimentation in der Küvette die Höhe des Strahlenbündels in Sedimentationsrichtung im Bereich von 0,2 bis 1,5 mm, vorzugsweise zwischen 0,3 und 0,5 mm liegt. Die ermittelten Meßdaten werden zur Steuerung mindestens eines der folgenden Parameter eingesetzt: Schlammzufuhr, Belebt-Schlammrückfiihrung aus dem Nachklärbecken, Sauerstoffzufuhr zum Belebtschlammbecken, Bewirtschaftung eines Zulauf-Ausgleichsbeckens, Dosierung von Zusatzstoffen, Denitrifikation, Dosierung von nicht kontinuierlich auftretenden Strömen, z.B. Grubenentleerung oder aus angeschlossenen Industriebetrieben oder rückgeführtes Wasser aus der Schlammpresse. Die mit der Lichtschranke erzielbare Auflösung ist dabei umso besser, je geringer die Höhe des Strahlenbündels in Sedimentationsrichtung ist.

Eine weitere Ausführung des erfindungsgemäßen Verfahrens zeichnet sich dadurch aus, daß ein Strahlenbündel mit einer horizontalen Breite des Strahles zwischen 2 bis 20 mm, insbesondere zwischen 3 bis 15 mm, bei einem Querschnitt des Sedimentationsgefäßes von 5 bis 100 cm$^2$ , insbesondere 5-50 cm$^2$, eingesetzt wird. Die Füllhöhe des Sedimentationsgefäßes kann 10 bis 40 cm betragen. Für die repräsentative Erfassung des Zustandes einer Suspension mit den sich darin bewegenden Partikeln eignen sich bevorzugt Meßvolumen (vom Strahlenbündel durchsetztes Volumen), wie sie sich aus den vorstehend angegebenen Werten für die Höhe des Strahlenbündels, der angeführten Breite des Strahlenbündels und der sich aus der Querschnittsform und der Querschnittsgröße ergebenden Länge des Bereiches, der vom Strahlenbündel durchsetzt wird, errechnet. Es können parallelwandige, bevorzugt rechteckige Sedimentationsgefäße, jedoch auch Sedimentationsgefäße mit Kreisquerschnitt verwendet werden. Das Sedimentatonsgefäß muß aus transparentem Material bestehen.

Strahlenbündel paralleler Strahlen können gemäß dem Stand der Technik erzeugt werden, z.B. mittels Parabolspiegel. Der Strahlquerschnitt kann durch Einschaltung von Blenden in den Strahlengang erzeugt werden.

Der Querschnitt der Küvette ist für Randeinflüsse verantwortlich und sollte ein gewisses Mindestmaß daher nicht unterschreiten. Die Obergrenze ist im Regelfall durch den Raumbedarf begrenzt, ebenso die Küvettenhöhe.

Um die Änderungen der Größe und der Form des Peaks im zeitlichen Verlauf der Sedimentation in der Küvette und der zeitlichen sowie örtlichen Änderung dieses Peaks zu ermitteln, können drei bis zehn Sensoren, denen bevorzugt je ein Strahlenbündel zugeordnet ist, vorgesehen werden. Für die Klärschlammbeurteilung ist es wesentlich, den Peak an mehreren Tiefen, i.e. zu verschiedenen Zeiten, zu messen, denn: der Peak wird nicht immer schon beim obersten Sensor sichtbar. Es gibt Beispiele, wo der Peak sich erst in größerer Tiefe des Sedimentationsgefäßes entwickelt hatte. Weiters benötigt man für die Vorausabschätzung der zeitlichen Entwicklung der Transparenz die Transparenz unmittelbar nach dem Peak, die Höhe des Peaks und die Absetzgeschwindigkeit des Schlammspiegels, wobei diese aus den Zeiten ermittelt wird, die der Schlammspiegel zum Sedimentieren von einem Sensor zum nächsten benötigt. Bei Anordnung von drei Sensoren in unterschiedlichen Tiefen des Sedimentationsgefäßes ergibt die Messung drei. Transparenz/Zeit Kurven entsprechend den drei Meßtiefen. Die spezifische Transparenz des Klarwasserüberstandes als Maß für die Trübung des Klarwassers erhält man, indem die am Sensor empfangene Lichtintensität auf die an einer Reinwasserprobe gemessene Referenzintensität bezogen wird. Die Durchgangzeit des Schlammspiegels am Sensor gibt, kombiniert mit der Tiefe des Sensors, ein Maß für die Absetzgeschwindigkeit des Belebtschlammes. Orientierende Einzelmessungen haben ergeben, daß verschiedene Belebtschlämme großtechnischer Anlagen sehr unterschiedliche Meßergebniskurven liefern. Der Verlauf der Meßkurve kann, entsprechend der Lage des Schlammspiegels zur Sensortiefe, in drei Teile geliedert werden: Im ersten Teil befindet sich der Schlammspiegel über dem Sensorniveau, wobei am Sensor kein Licht empfangen wird, da die suspendierte Biomasse das von der Lichtquelle in das Sedimentationsgefäß eindringende Licht absorbiert, streut oder reflektiert. Der zweite Teil der Kurve besteht in einer charakterisierenden starken Transparenzzunahme (Peakbereich), unmittelbar verursacht durch den Schlammspiegeldurchgang am Sensor. Der dritte Teil der Kurve besteht im allgemeinen in einer mäßigen Transparenzzunahme bis zum Meßende. Bei Schlämmen, die einen Peak aufweisen, ist diese Transparenzzunahme alleine in der Verdünnung durch das aus dem Schlammpulk austretende Wasser begründet. Die Klarheit dieses aus dem Pulk austretenden Wassers läßt sich über die Höhe des Peaks erfassen. Das bedeutet, daß der Peak typisch für die Reinigungsleistung der Sedimentation ist.

Aus den Kurvenverläufen können typische Merkmale (Durchgangzeit des Schlammspiegels am Sensor, Resttrübung am Ende der Meßzeit, charakteristische plötzliche Transparenzzunahme am Spiegeldurchgang, Verhalten der Merkmale der drei Meßkurvenabschnitte zueinander, etc.) definiert und in ihrer Ausprägung erfaßt werden.

Um bei dem erfindungsgemäßen Verfahren die zeitliche Entwicklung der Transparenz zu messen, d.h. den Peak an mehreren Orten (d.h. zu mehreren Zeiten) messen zu können, wird zweckmäßig die Lichtschranke während eines Meßzyklus, vorzugsweise mehrmals das Sedimentationsgefäß bis zum Erreichen des Schlammspiegels entlang bewegt und in den aufeinanderfolgenden Lagen der Lichtschranke sich am Sensor der Lichtschranke einstellenden Signale aufgezeichnet. Es kann auch das Lichtstrahlenbündel an mehreren über die Höhe des Sedimentationsgefäßes verteilt angeordneten Sensoren vorbeibewegt werden und die sich an jedem Sensor einstellenden Signale aufgezeichnet werden. Voraussetzung für eine befriedigende Erkennung des Peak ist allerdings eine sehr genaue horizontale Führung des Lichtstrahlenbündels gemeinsam mit dem Sensor, da ansonsten die dünne Zone größerer Transparenz direkt über dem Schlammspiegel nicht richtig erkannt wird.

Eine weitere Ausführungsfoml des erfindungsgemäßen Verfahrens sieht vor, daß zur Regelung der Abwasserkläranlage aus dem sich im Sedimentationsgefäß bildenden Überstand mindestens einer der folgenden Parameter: chemische Konzentrationen an Sauerstoff, Nitrat, Ammonium, Phosphat, physikalische Größen, wie pH-Wert, Redoxpotential, Farbe, Summenparameter, wie chemischer Sauerstoffbedarf (CBS), biologischer Sauerstoffbedarf (BSB), Gesamtgehalt (TOC) an organischem Kohlenstoff entweder durch Probenziehen und Analyse dieser Probe oder durch Durchstrahlung des Sedimentatonsgefäßes oder durch Messen in situ ermittelt wird. Die so ermittelten Meßdaten werden zur Steuerung der Schlammzufuhr und/oder der Belebt-Schlammrückführung (aus dem Nachklärbecken) und/oder der Sauerstoffzufuhr zum Belebtschlammbecken und/oder zur Bewirtschaftung eines Zulauf-Ausgleichsbeckens und/oder der Dosierung von nicht kontinuierlich auftretenden Strömen, z.B. Grubenentleerung oder aus angeschlossenen Industriebetrieben oder rückgeführtes Wasser aus der Schlammpresse eingesetzt.

In einer bevorzugten Variante des erfindungsgemäßen Verfahrens kann die Entwicklung der Transparenz im sich bildenden Überstand an mindestens einem Ort des Sedimentationsgefäßes als Funktion der Zeit gemessen werden. Als Meßort wird ein Höhenniveau des Sedimentationsgefäßes bevorzugt.

In einer Abwandlung des erfindungsgemäßen Verfahrens kann die Entwicklung der Transparenz im sich bildenden Überstand zu einer vorbestimmten Zeit als Funktion der Tiefe der Flüssigkeit im Sedimentationsgefäß gemessen werden. Aus der Art und Weise, wie die Transparenz sich über der Höhe des Sedimentationsgefäßes mit der Zeit verändert, kann auf Vorgänge wie Flockung, Koagulation oder Sedimentation geschlossen werden. Der Meßwert wird wieder zur Steuerung der Schlammzufuhr und/oder der Belebt-Schlammrückführung (aus dem Nachklärbecken) und/ oder der Sauerstoffzufuhr zum Belebtschlammbecken und/oder zur Bewirtschaftung eines Zulauf-Ausgleichsbeckens und/oder der Dosierung von Zusatzstoffen (z.B. Nährstoffe, Sedimentationshilfsmittel, Fällmittel, pH-Regulierungsmittel) und/oder zur Steuerung der Denitrifikation und/oder zur Dosierung von nicht kontinuierlich auftretenden Strömen, z.B. Grubenentleerung oder aus angeschlossenen Industriebetrieben oder rückgeführtes Wasser aus der Schlammpresse eingesetzt. Die Transparenz ist ein Maß für die Anzahl der nicht abgeschiedenen; sich im Überstand in Schwebe befindlichen Partikel.

Nach den vorstehend erwähnten Regelungsverfahren wird aus der gezogenen Belebtschlammprobe nicht nur das Schlammvolumen und die Trockensubstanz (zur Bestimmung des Schlammindex) bestimmt, sondern werden noch weitere, für den Reinigungserfolg der Kläranlage entscheidende Größen gemessen, welche entscheidend besser geeignet sind, als Basis für die Regelung der Abwässerkläranlage zu dienen als die gegenwärtig gemessenen Ablaufwerte. Die Regelung könnte hiebei händisch durchgeführt werden, in der Praxis wird man jedoch die nach dem erfindungsgemäßen Verfahren ermittelten Meßwerte als Eingangsgrößen für einen Regelalgorithmus verwenden.

In Weiterbildung der Erfindung wird dem Sedimentationsgefäß, Schlamm aus dem Überlauf des Belebungsbeckens, insbes. vor der Einmündung des Überlaufs in das Nachklärbecken, zugeführt. Der Meßvorgang bildet den Absetzvorgang des Nachklärbeckens an einer Belebtschlammprobe unter kontrollierten und immer gleichen Bedingungen in dem Sedimentationsgefäß (Küvette) nach, wobei aus dem "Überstand" (dem über dem Schlammspiegel gebildeten Klarwasser), die für den Ablauf relevanten Größen, sowie Größen, die für den Betrieb der Belebung oder den Betrieb des Nachklärbeckens relevant sind, bestimmt werden. Die Meßwerte geben die Eigenschaften des Belebtschlammes beim Austritt aus dem Belebungsbecken und damit die Funktion der biologischen Stufe der Kläranlage wieder, ohne daß diese mit den Eigenschaften des Nachklärbeckens vermengt oder durch die Verweilzeit zeitlich verschmiert werden.

Der Vorteil der erfindungsgemäßen Vorgangsweisen liegt darin, daß diese Meßwerte nicht vom Anfang oder Ende des Prozesses stammen, sondern Informationen über Zwischenschritte des Verfahrens enthalten. Die Verbesserung der Regelung der Kläranlage gründet sich darauf, daß die verwendeten Meßwerte die Eigenschaften und Funktion der biologischen Stufe widerspiegeln und nicht durch die Vorgänge im Nachklärbecken verändert und verschmiert sind, daß weiters ein in seiner Natur völlig neuer Meßwert, nämlich die Entwicklung der Transparenz über Zeit, verwendet werden kann und die Meßwerte früher verfügbar sind als Meßwerte vom Ablauf.

Die die chemische Konzentration und die physikalischen Größen charakterisierenden Werte werden mittels handelsüblichen Geräten bestimmt, wie sie beispielsweise von folgenden Firmen vertrieben werden: Murtac Meß- und Regeltechnik, analytische Chemie GmbH, Lobmingerstr. 20, A-8720 Knittelfeld, Dr. Staiger, Mohilo & Co. GmbH, Baumwasenstr. 5, D-73614 Schorndorf, WTW GmbH, Dr.Karl Slevogt Str. 1, D-82360 Weilheim, und Dr. Lange GmbH, Willstätterstr. 11, D-40549 Düsseldorf. Die Sauerstoffmessung kann auch durch Absenken einer Glasfaser in den Überstand nach CONTE (Dissertation Hannover 1996) ausgeführt werden. Werden die den Überstand charakterisierenden Meßdaten durch Durchstrahlen der Küvette bestimmt, so wird die Absorption ermittelt, die sich bei Durchstrahlung mit Strahlen einer bestimmten Wellenlänge ergibt. Die Farbe des Überstandes kann durch Durchstrahlung des Überstandes ermittelt werden.

In besonderer Ausgestaltung der Erfindung können als zusätzliche Meßwerte, den Zulauf zur Kläranlage und/oder den Ablauf aus der Kläranlage charakterisierende Größen ermittelt und ebenfalls zur Steuerung der Schlammzufuhr und/oder der Belebt-Schlammrückführung (aus dem Nachklärbecken) und/oder der Sauerstoffzufuhr zum Belebtschlammbecken und/oder zur Bewirtschaftung eines Zulauf-Ausgleichsbeckens und/oder der Dosierung von Zusatzstoffen (z.B. Nährstoffe, Sedimentationshilfsmittel, Fällmittel, pH-Regulierungsmittel) und/oder zur Steuerung der Denitrifikation und/oder zur Dosierung von nicht kontinuierlich auftretenden Strömen, z. B. Grubenentleerung oder aus angeschlossenen Industriebetrieben oder rückgeführtes Wasser aus der Schlammpresse eingesetzt werden.

Zusammenfassend stellt sich der erfinderische Gedanke im Prinzip als Bereitstellung von Meßwerten aus einer in dem Sedimentationsgefäß unter kontrollierten Bedingungen erfolgenden Sedimentation für die Regelung dar, wobei auch im Prinzip konventionelle Regelungstechniken zur Anwendung kommen können. Zur Regelung können auch Additive zugegeben werden, etwa Nährstoffe vor der Belebung, Fällungsmittel oder Flockungshilfsmittel durch entsprechende Ansteuerung. Dies ist aber nur dann zweckentsprechend, wenn es rechtzeitig geschieht, weshalb die Meßwerte frühzeitig verfügbar sein müssen und die Meßwerte daher den Schlamm am Austritt aus der Belebung korrekt beschreiben müssen. Bei diskontinierlichem Anlagenbetrieb wird zweckmäßigerweise der Schlamm zum Ende der Belüftungsperiode entnommen und dem Sedimentationsgefäß zugeführt.

Grundlage für eine automatische Regelung von Abwasserkläranlagen bilden mathematische Modelle zur Beschreibung der ablaufenden Vorgänge und bestehenden Ursache- und Wirkungsprinzipien. Das mathematische Modell ist hiebei das Ergebnis einer Analyse des Systems, wobei zwei Möglichkeiten zur Modellbildung als Basis für Regelungsstrategien zur Verfiigung stehen, nämlich

1. eine Modellbildung, die auf der Anwendung naturwissenschaftlicher Gesetzmäßigkeiten basiert und zu Bilanzgleichungen für Stoffe, Massen und Energien führt, und
2. mathematische Modelle, die ohne Kenntnis der inneren Zusammenhänge, aus der Beobachtung des Ein-/Ausgangsverhaltens des Systems über wissensbasierte Systeme, wie z.B. Neuronale Netze, formuliert werden können.

ad 1. Die anerkanntesten Modelle zur Simulierung des Betriebs einer biologischen Kläranlage und zur Ableitung von Regelungsstrategien daraus, sind das ASM1 [Henze et al., 1987, Activated sludge model No. 1, Scientific and Technical Reports, No. 1, IAWQ, London, 1987] und das ASM2 [Henze et al, 1987, Activated sludge model No. 2, Scientific and Technical Reports, No. 3, IAWQ, London, 1995], herausgegeben von der International Association on Water Quality (IAWQ). In diesen Modellen wird das zulaufende Abwasser mit Hilfe von dreizehn Stofffraktionen charakterisiert. Auf diese Stoffe wirken acht Umwandlungsprozesse ein. Zur Beschreibung der Umwandlungsprozesse sind fünf stöchiometrische Parameter und vierzehn kinetische Parameter erforderlich. Das ASM2-Modell ist eine Weiterentwicklung des ASM1-Modells. Es berücksichtigt zusätzlich noch die Zustandsgrößen und die Umwandlungsprozesse, die erforderlich sind, um die biologische Phosphatelimination angenähert zu beschreiben. Die Erfolge dieser Methoden sind sehr bescheiden. Oder es wird überhaupt nicht modelliert, sondern es wird der $O_2$-Gehalt in der Belebung und das Schlammmanagement nach Gutdünken des Klärwärters eingestellt. Aus solch einem - logischerweise nicht optimalen - Betrieb einer Kläranlage, kann nicht bei minimalen Betriebskosten der reinst mögliche Ablauf produziert werden. Die Hauptursache dieser Misere liegt in der Anzahl der relevanten Variablen, deren gegenseitiger Beeinflussung, sowie in der Hauptsache in den veränderlichen Eigenschaften des biologischen Schlammes. Die Schwierigkeit der Bündelung aller Variablen in einem mechanistischen Modell wächst durch zusätzliche Meßgrößen zur Unmöglichkeit. Trotz dieser Probleme sind diese Modelle international in der Wissenschaft Ausgangspunkt für viele Weiterentwicklungen. In umfangreichen Software-Paketen verarbeitet, werden sie verwendet, um neue Fließschemata zu definieren bzw. Experimente zu planen. In der Praxis finden diese Modelle aufgrund ihrer Komplexität jedoch kaum Anwendung. Die Bestimmung der wesentlichen Parameter ist überaus aufwendig und damit teuer. Durch das dynamische Verhalten der Anlagen sind diese Parameter auch zeitlich variabel. Das Modell muß also durch ständige Bestimmung der Parameter (am besten on-line) adaptiert werden. Parameterübertragung von einer Anlage auf eine andere ist aufgrund der einzigartigen Zusammensetzung der einzelnen Abwässer nicht möglich.

ad 2: Eine Modellbildung mittels Neuronaler Netze hat gegenüber der Modellbildung nach 1 folgende Vorteile: Eine direkte Nutzung und Aufarbeitung von Meßwerten ist möglich, so daß keine Formalisierung des Wissens notwendig ist. Aufgrund der großen Generalisierungsfähigkeit sind wissensbasierte Systeme auch bei unvollständigen, fehlerhaften sowie unbekannten Meßwerten in der Lage, eine weitgehend sinnvolle Berechnung eines Ergebniszustandes vorzunehmen. Über wissensbasierte Systeme gelingt die Modellierung beliebiger nichtlinearer Funktionen. Einsatz finden Neuronale Netze in der Kläranlagentechnik derzeit zur Steuerung einzelner Teilbereiche der Anlage (z.B. [Schlegel und Teichgräber, 1993, 6. IAWQ-Workshop on ICA, 25-26.06.1993 in Banff, Hamilton/Canada, Korrespondenz Abwasser, 10/93] Steuerung eines Ausgleichsbeckens im Zulauf einer Kläranlage) und zur Lösung von Meßwertaufgaben über Softsensoren (Messung von meßbaren Ersatzgrößen und Errechnung der eigentlichen Meßgröße) [Schmitt und Hansen, 1998, Fuzzy control und Neuronale Netze zur Optimierung der Stickstoff- und Phosphorelimination, Schriftenreihe des Fachgebietes Siedlungswasserwirtschaft der Universität Kaiserslautern, Band 11). Dabei können sämtliche on-line meßbaren Größen (auch sogenannte Summengrößen wie beispielsweise der CSB oder das Schlammvolumen) zur Modellbildung herangezogen werden, da die inneren Zusammenhänge zwischen den Größen nicht bekannt sein müssen und in beliebiger Komplexität Zusammenhänge auch zwischen nicht kohärenten Größen über Neuronale Netze approximiert werden können. Eine Adaptierung des wissensbasierten Modells ist einfach über das ständig neu gemessene Ein-/Ausgangsverhalten des Systems möglich.

In einer Veröffentlichung von Fuchs A., Schäpers D., Staudinger G., (1999) wird dargelegt, daß es heute durchaus möglich ist, mittels eines Neuronalen Netzes gut zutreffende Vorhersagen über das Betriebsverhalten einer nach dem Belebungsverfahren arbeitenden Kläranlage zu machen. Das Neuronale Netz wird an der vorhandenen Kläranlage trainiert, es kann durch regelmäßiges Nachtrainieren stets die gerade herrschenden biologischen Eigenschaften der Biocönose "lernen"; das Netz wird "adaptiert". Eigene Versuche zeigten, daß die Sedimentationseigenschaften eines Klärschlammes sich innerhalb weniger Stunden dramatisch ändern können, wenn die Lebensbedingungen sich in dieser Zeit ändern. Weiters wurde gefunden, daß der Klärschlamm wieder die früheren Sedimentationseigenschaften annimmt, wenn die alten Lebensbedingungen innerhalb einer gewissen Zeit, z.B. innerhalb von 24 Stunden, wieder eingestellt werden.

Diese Änderung ist also reversibel und sie kann täglich, ja sogar zweimal täglich, auftreten. Die Biocönose bleibt damit dieselbe. Die Zusammensetzung der Biocönose paßt sich neuen Lebensbedingungen wesentlich langsamer - im Wochenabstand - an. Eine wissensbasierte Methode, insbesondere ein Neuronales Netzwerk, ist imstande, mit dem gegebenen System umzugehen und sich selbst an die dauernd veränderlichen Zusammenhänge anzupassen, was durch adaptives Lernen des Neuronalen Netzes realisierbar ist, wobei beim Trainieren des Netzes jeweils die ältesten Trainingsdaten aus der Menge zu trainierender Daten entfernt werden und durch den aktuell zuletzt gemessenen Datensatz ersetzt werden. Älteres Wissen wird dadurch "vergessen" bzw. durch aktuelles Wissen ersetzt. Bei dieser Sachlage ist daher die Verwendung eines Neuronalen Netzes einem mechanistischen Algorithmus vorzuziehen, weil das neuronale Netz selbst die Form der mathematischen Verbindung zwischen Eingangs- und Ausgangsgrößen bestimmt. Durch Variation der beeinflußbaren Eingangsgrößen lassen sich solche Stellgrößen finden, bei deren Verwendung das Optimierungsziel am nächsten erreicht wird, nämlich Minimierung des Energieverbrauches und/oder Minimierung einer Emissionsgröße.

Eine besondere, weitere Ausführungsvariante des erfindungsgemäßen Verfahrens schlägt vor, die ermittelten Meßdaten sowie die gegebenenfalls ermittelten Meßwerte aus dem Zu- und Ablauf aus der Kläranlage und/oder die Transparenzentwicklung, als elektrische Signale, einem als wissensbasiertes, adaptives, mathematisches Modell ausgebildeten Regelalgorithmus einer Regeleinrichtung zuzuführen, deren Ausgangsgröße zur Steuerung der Schlammzufuhr und/oder der Belebtschlammrückführung und/oder der Sauerstoffzufuhr zum Belebtschlammbecken und/oder zur Bewirtschaftung eines Zulauf-Ausgleichsbeckens und/oder der Dosierung von Zusatzstoffen (z. B. Nährstoffe, Sedimentationshilfsmittel, Fällmittel, pH-Regulierungsmittel) und/oder zur Steuerung der Denitrifikation und/oder zur Dosierung von nicht kontinuierlich auftretenden Strömen, z.B. Grubenentleerung oder aus angeschlossenen Industriebetrieben oder rückgeführtes Wasser aus der Schlammpresse eingesetzt wird. Wird hiebei ein neuronales Netz als mathematisches Modell eingesetzt, umgeht man die Notwendigkeit der Kenntnis der Zusammenhänge, die für ein mechanistisches Modell erforderlich ist und kann günstigere Klärergebnisse im Vergleich zur Anwendung von mechanistischen Modellen erreichen.

Zur Messung der zeitlichen Entwicklung der Transparenz kommt bevorzugt ein Verfahren zur Anwendung, bei dem mindestens eine, bevorzugt jedoch mehrere Lichtschranken je mit Sensor und horizontal das Sedimentationsgefäß durchsetzendem Lichtstrahlenbündel eingesetzt werden und bei Einsatz mehrerer Lichtschranken, diese mit ihren Sensoren in mehreren, voneinander unterschiedlichen Tiefen unterhalb des Flüssigkeitsspiegels außerhalb des Sedimentationsgefäßes angeordnet werden und die sich an der bzw. an den Lichtschranken einstellenden Signale weiterverarbeitet werden. Es kann jedoch zur Messung der Entwicklung der zeitlichen Transparenz auch eine Lichtschranke mit horizontalem Lichtstrahlenbündel und zugehörigem Sensor zum Empfang des Lichtstrahlenbündels, nachdem dieses das Sedimentationsgefäß durchsetzt hat, mindestens einmal, bevorzugt jedoch mehrere Male das Sedimentationsgefäß mindestens bis zum Erreichen des Schlammspiegels entlang bewegt werden und die sich hiebei in den aufeinanderfolgenden Lagen der Lichtschranke an deren Sensor (in unterschiedlichen Tiefen) einstellenden Signale registriert werden oder das Lichtstrahlenbündel an mehreren über die Höhe des Sedimentationsgefäßes verteilt angeordneten Sensoren vorbeibewegt werden und die sich an jedem Sensor einstellenden Signale aufgezeichnet bzw. weiterverarbeitet werden.

Zur Erzielung genauer Meßwerte, insbesondere wenn die abrupte Zu- und Abnahme der Transparenz im zeitlichen Verlauf der Sedimentation im Sedimentationsgefäß (Küvette) mit großer Genauigkeit festgestellt werden soll, wird in Weiterbildung der Erfindung vorgeschlagen, daß vor jedem Meßzyklus die Innenwand des Sedimentationsgefäßes durch Anstrahlen mit einem Reinigungsmedium, insbesondere Wasser, gereinigt und das Reinigungsmedium aus den Düsen eines vertikal über den von den Lichtschranken durchstrahlten Bereich bewegten Spülkopf gegen die Wand des Sedimentationsgefäßes gerichtet ist und das Reinigungsmedium am unteren Ende der Küvette abgezogen wird. Bei Anwendung dieses Verfahrens gelingt es, die Küvette derart zu reinigen, daß beim Befüllen des Sedimentationsgefäßes mit klarem Wasser, dieses Wasser nicht mit partikulären Stoffen verunreinigt wird. Nur so ist es möglich, einen Referenzwert zu messen, und erst dadurch Zonen größerer und geringerer Transparenz unterscheiden zu können. Nur durch Spülen der Küvette mit einer Reinigungsflüssigkeit (vorzugsweise sauberes Wasser) zum Zwecke der Reinigung der Küvette und Ablassen des Schlammes und der Reinigungsflüssigkeit nach unten, ergibt sich ein partikelfreier Inhalt der Küvette zur Bestimmung des 0-Wertes.

Die aufwendige Reinigung ist darüberhinaus unbedingt notwendig, um ein längeres Betreiben der Meßapparatur ohne Wartung durchführen zu können.

Für die Auffindung des Peaks sind drei Faktoren von Bedeutung:

    1.) Das schmale Strahlenbündel, um die schmale Schicht höherer Transparenz überhaupt messen zu können,
    2.) die Druckwasserspülung, die die unbedingt notwendige Reinigung der Küvette vornimmt, und
    3.) der Spülwasserablauf nach unten.

Diese Maßnahmen erlauben es, den Referenzwert zu finden, um Zonen niedrigerer und höherer Transparenz unterscheiden zu können.

Zum Zwecke der Kalibrierung erweist es sich als zweckmäßig, daß bei jedem Meßzyklus das Sedimentationsgefäß (Küvette) nach der Reinigung und vor der Befüllung mit Schlamm, mit klarem Wasser befüllt und sodann die Lichtschranken kalibriert werden.

Eine weitere erfindungsgemäße Verfahrensführung sieht vor, den Schlamm in das Sedimentationsgefäß einzusaugen. Durch diese Verfahrensführung, die auch anwendbar ist, wenn nur eine einzige feststehende Lichtschranke angewendet wird, wird sichergestellt, daß die Strukturen des Klärschlammes durch die Manipulation des Schlammes beim Befüllen des Sedimentationsgefäßes nicht zerstört werden, sodaß auch die abrupte Zu- und Abnahme der Transparenz im zeitlichen Verlauf der Sedimentation, welche abrupte Zu- und Abnahme die Tendenz der Mikroorganismen eines Klärschlammes, größere Aggregate mit unterschiedlichen Strukturen zu bilden, in seiner Form und Höhe reflektiert, die wahren Verhältnisse möglichst genau wiedergibt. Die Ansaugleitungen sollen dabei möglichst kurz, glatt und gerade sein. Das Ansaugen kann durch Schlauch- oder andere Vakuumpumpen bewerkstelligt werden.

Zur Messung der Entwicklung der Transparenz des Klärschlammes kann wie bereits erwähnt, mindestens eine Lichtschranke eingesetzt werden, mit einem Strahlenbündel, insbesondere paralleler Strahlen, das die Küvette quer zur Sedimentationsrichtung durchsetzt, und einem Sensor, auf den das Strahlenbündel nach Durchsetzen der Küvette auftrifft. Geräte mit solchen Lichtschranken werden als Sedimentometer bezeichnet. Die US-PS 1327044 und die US-PS 1264009 beschreiben Sedimentometer. Sedimentometer können bei spezieller Ausgestaltung zur Messung eines bisher in der Literatur nicht beschriebenen Phänomens, des zuvor beschriebenen "Peaks" verwendet.werden.

Aus der AT-PS 393169 ist ein Meßgerät zur Bestimmung der Korngrößenverteilung feiner Pulver bekannt, bei dem die Basis der Messung die Extinktion eines Lichtstrahles ist, der eine Glasküvette durchdringt, in welcher sich eine Suspension des zu vermessenden Pulvers befindet. Durch die Verwendung von drei, in bestimmten Abständen entlang der Küvette angeordneten Lichtstrahlen, kann der Meßvorgang abgekürzt werden. Ähnliche nach dem Sedimentationsprinzip mit Durchstrahlung arbeitende Meßgeräte sind in der US-PS 1575726 und der PCT-Publikation/HU86/00035 beschrieben, wobei teilweise anstatt Licht auch γ-oder Röntgenstrahlen benutzt werden. Gemäß der DE-PS 3690262 und der DE-OS 3504894 wird eine größere Anzahl von Lichtstrahlen zur Messung eingesetzt.

Ein Sedimentometer mit vertikal bewegtem horizontalem Lichtstrahl ist aus der US-PS 1327044 und aus der US-PS 1264009 bekannt.

Aus der US-PS 3160745 ist eine Vorrichtung mit zwei übereinander angeordneten Strahlungsquellen zur Durchstrahlung eines Gefäßes bekannt. Quantifiziert wird hiebei die vertikale Ungleichverteilung der Dichte einer Suspension.

In der US-PS 4084426 ist ein Meßgerät als Schaum-Messer über einer Flüssigkeit beschrieben, bei dem ebenfalls die Durchstrahlung einer mit dem zu vermessenden Medium gefüllten Küvette gemessen wird.

Zur quantitativen Vermessung der Sedimentation von Schlämmen sind ebenfalls bereits Geräte bekannt und teilweise auch schon auf dem Markt eingeführt:

Hiezu gehört das Gerät "TURBISCAN MA 1000" der Fa. Formulaction in Frankreich, bei welchem die Veränderung einer Suspension mit der Zeit mittels eines vertikal bewegten Lichtschrankens gemessen wird, wobei sowohl Transparenz wie auch Streuung bestimmt werden.

Nahezu ident im Prinzip und Aufbau sind Geräte der Firma "BTG" Anlagentechnik GmbH in Bochum und Staiger-Mohilo (Deutschland). Diese Geräte werden zur Messung des Absetzverhaltens von hauptsächlich biologischen Schlämmen eingesetzt. Der zu vermessende Schlamm befindet sich dabei in einer senkrechten Küvette, die über der Höhe, nach der Lage des Schlammspiegels, durch eine Kombination aus Lichtquelle und Sensor abgetastet wird. Das Meßergebnis ist die Position des Schlammspiegels als Funktion der Zeit, woraus sich eine Schlammspiegelsinkgeschwindigkeit errechnen läßt. Nach 30 Minuten Meßzeit kann das Schlammvolumen abgelesen werden. Zum Entleeren der Küvette nach erfolgter Messung wird der Schlamm durch einen Kolben nach oben ausgeschoben und anschließend der Meßzylinder mit Meßgut, also mit Schlamm, gespült. Die frische Probe fließt sodann von oben in die Küvette. Die Säuberung der Küvette ist bei dieser Vorgangsweise problematisch. Die Küvettenwand belegt sich nämlich mit der Zeit, sodaß die abgeminderte Qualität der Durchsichtigkeit ebenfalls die Bestimmung des Peaks verhindert.

Ein weiteres "Settlo Meter" genanntes Gerät wird von Vanrollegem et al in "Water Science and Technology" (33 (1, 1996), Seiten 37-51) beschrieben. Auch hier befindet sich der Schlamm in einer vertikalen Küvette, neben der sich ein vertikaler Lichtstab befindet. Auf der anderen Seite der Küvette wird ein lichtempfindlicher Sensor vertikal verfahren. Der Sensor erkennt die Lage des Schlammspiegels und folgt diesem auf dem Weg nach unten. Aus der Änderung der Position des Sensors kann die Sinkgeschwindigkeit des Schlammes ermittelt werden.

Die Methode der horizontalen Durchstrahlung einer Küvette, in der sich sedimentierender Schlamm befindet, ist also bekannt und wird in der Praxis angewendet.

In Weiterbildung der Erfindung kann eine Vorrichtung zur Ausübung des erfindungsgemäßen Verfahrens vorgesehen werden, bei der das Sedimentationsgefäß mit einer seitlichen Öffnung zum Entnehmen einer Probe aus dem Überstand versehen ist, wobei diese Öffnung sich bevorzugt 10 bis 50, insbesondere 15 bis 30 mm unter dem Löffel befindet. Ist die Öffnung im bevorzugten Bereich unter dem Löffel angeordnet, so wird sichergestellt, daß im Falle der Durchstrahlung der Küvette bzw. der Verwendung von Lichtschranken zur Ermittlung der Transparenz, keine Kollision mit dem Lichtstrahl bzw. den Lichtbündeln der Lichtschranken auftritt, anderseits ist jedoch darauf zu achten, daß die Öffnung sich nicht im Bereich des verdichteten Schlammes befindet, sondern in den Bereich des geklärten Überstandes mündet.

Um sicherzustellen, daß über die Entnahme aus dem Sedimentationsgefäß kein Klärschlamm zu den nachgeschalteten Meßgeräten kommt und dort zu Verschmutzungen oder Verstopfungen führt, ist in Weiterbildung der Erfindung vorgesehen, daß ein Entnahmerohr von oben in das Sedimentationsgefäß ragt und daß das Entnahmerohr bevorzugt 10 bis 100 mm, insbesondere 15 bis 30 mm, unter den Flüssigkeitsspiegel reicht.

Manche physikalische oder chemische Größen können auch direkt in situ im Überstand gemessen werden, wenn eine entsprechende Sonde in den Überstand ragt. So beschreibt E. Conte (Optische Sauerstoffsensoren auf Basis von Intensitäts- und Lebenszeitmessungen, Dissertation Universität Hannover 1996) ein Glasfasersystem, welches mittels einer nur 600 $\mu$m dicken Glasfaser den Sauerstoffgehalt in einer Flüssigkeit mißt.

Eine besondere Ausführungsform schlägt daher vor, daß ein Sensor zur Messung einer Konzentration (z.B. Sauerstoff) oder einer physikalischen Eigenschaft (z.B. Redoxpotential) in den Überstand ragt und daß das Sensorende sich bevorzugt 10 bis 50 mm, insbesondere 15 bis 30 mm unter dem Löffel befindet.

Die Erfindung wird nachstehend anhand der Zeichnung beispielsweise näher erläutert. Es zeigen:

Fig. 1 eine schematische Darstellung einer nur zum Teil gezeigten Anlage zur Behandlung von Klärschlamm, in der das erfindungsgemäße Verfahren ausgeübt werden kann,
Fig. la eine gegenüber Fig. 1 geringfügig ergänzte Darstellung,
Fig. 2 die Darstellung des Verlaufes der Transparenz über die Höhe der Schlammschicht in einem Sedimentationsgefäß, bei Durchgang des Schlammspiegels durch die Meßebene des betreffenden Sensors,
Fig. 3 in einer Darstellung entsprechend Fig. 2 den Verlauf der Transparenz über die Höhe des Sedimentationsgefäßes, wobei die Messung an zwei unterschiedlichen Niveaulagen des Schlammspiegels erfolgte,
Fig. 4 schematisch ein im Querschnitt rechteckiges Sedimentationsgefäß mit einem das Sedimentationsgefäß durchsetzenden Bündel paralleler Lichtstrahlen, Fig. 5 in einem Längsschnitt das Sedimentationsgefäß mit Spülkopf,
Fig. 6 ein gegenüber Fig. 5 abgeändertes Sedimentationsgefäß mit Entnahmeeinrichtung für den Überstand und
Fig. 7 ein Blockschaltbild einer Regelung für eine biologische Abwasserkläranlage gemäß Fig. la.

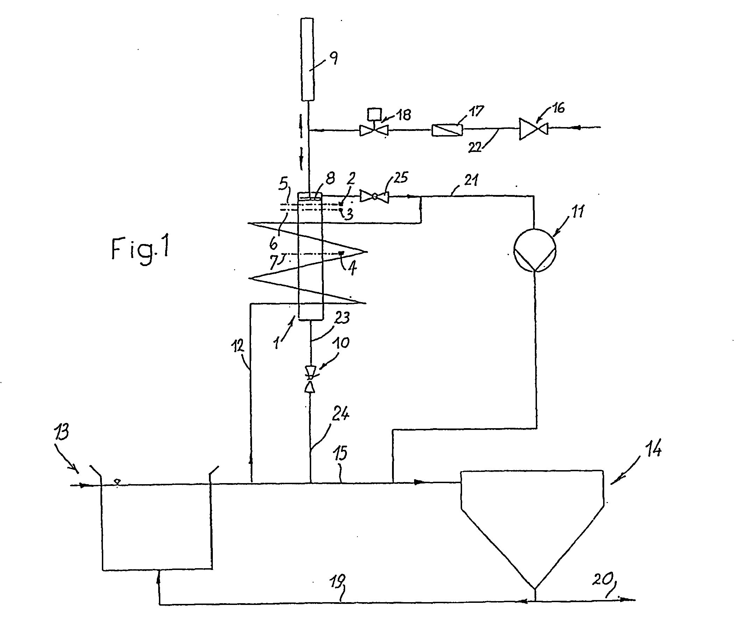

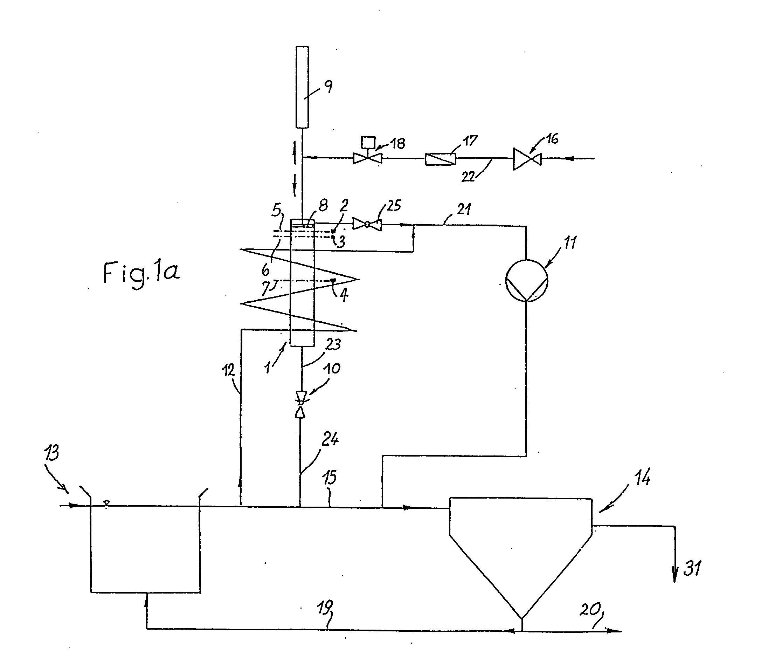

In den Fig. 1, la der Zeichnung ist von der Behandlungsanlage für Klärschlamm lediglich das Belebungsbecken 13 und das Nachklärbecken 14 dargestellt. Die Becken 13 und 14 sind über eine Leitung 15 miteinander verbunden, wobei in den Boden eines jeden der Becken 13, 14 eine Rücklaufleitung 19 mündet, über welche Rücklaufschlamm vom Nachklärbecken 14 dem Belebungsbecken 13 wieder zugeführt werden kann. Zur Abfuhr von Überschußschlamm steht eine Leitung 20 zur Verfügung, die ebenfalls vom Boden des Nachklärbeckens 14 ausgeht. Das Sedimentationsgefäß, das zur Beobachtung einer aus der Leitung 15 entnommenen Schlammprobe über eine bestimmte Meßzeit dient, ist in der Zeichnung mit 1 bezeichnet. Der beste Beprobungsort wird im allgemeinen kurz vor dem Einlauf in das Nachklärbecken 14 sein. Bei Anlagen, die nach dem Batch-Verfahren arbeiten, wird die Probe aus dem Belebungsbecken 13, am besten gegen das Ende der Belüftung, gezogen.

Wesentlich ist, daß der Schlamm durch das Probeziehen nicht verändert wird; er wird darum am besten durch eine glatte Rohrleitung in das Sedimentationsgefäß 1 gesaugt. Das Sedimentationsgefäß 1 besteht aus transparentem Material.

Der eigentliche Meßvorgang spielt sich im Sedimentationsgefäß 1 (nach den Fig. 1, 1a, 4, 5 oder 6) ab, in welches der Schlamm eingeschlossen ist. In dem bevorzugt zylindrischen, senkrecht angeordneten Sedimentationsgefäß sedimentieren die Schlammpartikel, während sich oberhalb des Schlammes ein mehr oder weniger klarer Überstand bildet. Im Sedimentationsgefäß herrschen ideale Sedimentationsbedingungen ohne äußere Störung, sodaß davon ausgegangen werden kann, daß der klarstmögliche Überstand entsteht. An diesem Überstand werden die - für eine Regelung relevanten - Meßwerte gemessen.

Den Ablauf aus dem Nachklärbecken 14 zeigt Fig. 1a, wo der Ablauf mit 31 bezeichnet ist. Der Ablauf 31 aus dem Nachklärbecken 14 kann günstigstenfalls so gute Eigenschaften haben wie der Überstand im Sedimentationsgefäß 1.

In biologischen Kläranlagen nach den Fig. 1 und 1a wird das Klärergebnis im Wasser des Ablaufes 31 aus dem Nachklärbecken 14 gemessen. Zur Bestimmung des Schlammvolumens und der Trockensubstanz (daraus den Schlammindex) wird eine Klärschlammprobe aus der Leitung 15 in Fig. 1 gezogen. Aus an dieser Stelle gezogener Probe können, wie noch beschrieben wird, weitere Meßwerte, bestimmt werden, die für die Regelung nutzbar sind, sofeme ein geeignetes Gerät eingesetzt wird.

Um das Sedimentationsgefäß 1 auf konstanter Temperatur zu halten, ist eine Thermostatleitung 12 vorgesehen, welche das Sedimentationsgefäß wendelförmig umschließt. Die Thermostatleitung 12 geht dabei von der Verbindungsleitung 15 der beiden Becken 13, 14 ab und mündet in eine Rückführleitung 21, die zur Verbindungsleitung 15 zwischen den beiden Becken 13 und 14 zurückführt und in welche eine insbesondere als Schlauchpumpe ausgebildete Saugpumpe 11 eingebaut ist.

Gemäß Fig. 1, 1a sind drei Lichtschranken über die Höhe des Sedimentationsgefäßes 1 verteilt angeordnet. Die Strahlenbündel der drei Lichtschranken sind mit 5, 6 und 7 bezeichnet, und die jedem Strahlenbündel 5, 6 und 7 zugeordneten Sensoren, auf welche die Strahlenbündel treffen, nachdem sie das Sedimentationsgefäß durchsetzt haben, sind mit 2, 3 und 4 bezeichnet. In das Sedimentationsgefäß ist ein Spülkopf 8 eingeschoben, der mittels eines Linearmotors 9 im Sedimentationsgefäß auf- und abbewegt werden kann. Dem Spülkopf 8 kann über eine Frischwasserleitung 22 klares Wasser zugeführt werden.

In die Frischwasserleitung 22 ist ein Druckreduzierventil 16, eine Filtereinheit 17 und ein Magnetventil 18 zum Öffnen und Schließen, der Frischwasserleitung 22 eingebaut. In den Boden des Sedimentationsgefäßes 1 mündet eine Leitung 23, die an einen Hahn 10 angeschlossen ist. In einen Anschluß des Hahns 10 mündet eine Leitung 24, deren Ende an die Verbindungsleitung 15 zwischen den Becken 13 und 14 angeschlossen ist, sodaß über diese Leitung bei entsprechender Stellung des Hahns 10 der Inhalt (Klärschlamm) des Sedimentationsgefäßes der Leitung 15 zugeführt werden kann bzw. Klärschlamm aus der Leitung 15 entnommen und über den Boden des Sedimentationsgefäßes 1 mittels der Saugpumpe 11 und einen in die Rückführleitung 21 eingebauten Hahn 25 in das Sedimentationsgefäß 1 eingesaugt werden kann.

Um die Entwicklung der Transparenz eines im Sedimentationsgefäß 1 sedimentierenden Klärschlamms über eine bestimmte Zeit zu messen, wird zunächst nach einem abgeschlossenen Meßvorgang das Sedimentationsgefäß 1 nach unten über den Hahn 10 und die Leitungen 23 und 24 in die Verbindungsleitung 15 zwischen dem Belebungsbecken 13 und dem Nachklärbecken 14 entleert und gelangt über die Verbindungsleitung 15 in das Nachklärbecken 14. Nachdem das Sedimentationsgefäß 1 in der oben beschriebenen Weise von Klärschlamm befreit wurde, wird der Spülkopf 8 mittels des Linearantriebes 9 nach unten bewegt, wobei über die Leitung 22 dem Spülkopf 8 Reinigungsmittel, z.B. klares Wasser, zugeführt wird. Solcherart wird die Wand des Sedimentationsgefäßes 1 zumindest im Bereich des bzw. der Lichtschranken 5, 6, 7 gereinigt.

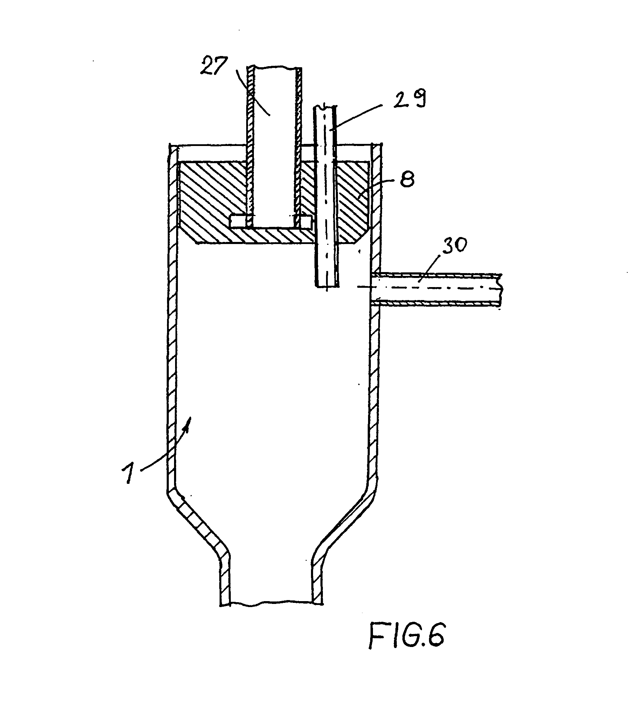

In Fig. 5 ist der Spülkopf 8 im Detail dargestellt. In die hohl ausgebildete Kolbenstange 27 mündet die Leitung 22 für die Spülwasserzufuhr. Das Spülwasser wird dann über Düsen 28, die sich in der Seitenwand des Spülkopfes 8 befinden, der Innenwand des Sedimentationsgefäßes 1 zugeführt, wo etwaige Schlammpartikel durch die Strahlen, die aus den Düsen 28 austreten, abgewaschen werden. Die Düsen 28 können auch als Schlitzdüsen ausgebildet werden, die sich in peripherer Richtung um den Umfang des Spülkopfes erstrecken.

Im dargestellten Ausführungsbeispiel ist die Seitenwand des Spülkopfes abgeschrägt und sind die Düsen . 28 im abgeschrägten Teil des Spülkopfes angeordnet. Der Vordruck für die Reinigung der Küvettenwand liegt bevorzugt zwischen 1 bis 6 bar am Austritt aus den Düsen 28.

Während der Reinigung des Sedimentationsgefäßes 1 gibt der Hahn 10 die Leitung 24 frei, sodaß das Spülwasser kontinuierlich abströmen kann. Nachdem der Reinigungsvorgang beendet ist, wird der Hahn geschlossen und sauberes Wasser in das Sedimentationsgefäß 1 über die Leitung 22 und die Düsen 28 eingelassen. An den Sensoren 2, 3 und 4 bzw. für den Fall, daß nur ein Sensor vorhanden ist, an diesem, kann dann ein Wert der Transparenz festgestellt werden, der als Nullwert bezeichnet wird und welcher die optischen Eigenschaften des Systems sowie auch eine eventuell nach dem Waschvorgang noch verbliebene Restverschmutzung des Sedimentationsgefäßes 1 berücksichtigt.

Nach der Feststellung des Nullwertes oder der Nullwerte (bei mehreren Lichtschranken) wird das im Sedimentationsgefäß 1 enthaltene Wasser über die Leitung 24 abgeführt. Der Hahn 10 wird hierauf umgestellt und über die Saugpumpe 11, die Leitung 21 und den Hahn 25 Klärschlamm aus der Leitung 15 über die Leitung 24 von unten in das Sedimentationsgefäß 1 eingesaugt. Durch das Einsaugen wird unterschiedlich zum Pumpen sichergestellt, daß die fragilen Flocken des Schlammes nicht zerstört werden. Nach dem Einsaugen des Schlammes wird der Hahn 10 geschlossen und der Spülkopf 8 auf eine genau definierte, vorgegebene Höhe oberhalb des höchsten Lichtschrankens, dem der Sensor 2 zugeordnet ist, positioniert. Die Intensität des auf den Sensor 2 bzw. auf die Sensoren 2, 3 und 4 auftreffenden Lichtes, das das Sedimentationsgefäß 1 und den darin enthaltenen Klärschlamm durchsetzt hat, wird bei geschlossenem Hahn 25 gemessen und registriert. Am Ende der Meßzeit (10 - 240 min) wird der Hahn 10 geöffnet und der Inhalt des Sedimentationsgefäßes über die Leitung 24, der Verbindungleitung 15 zwischen Belebungsbecken 13 und Nachklärbecken 14 wieder zugeführt.

Nun kann ein neuer Zyklus mit der Reinigung des Sedimentationsgefäßes 1, so wie dies bereits beschrieben wurde, wieder beginnen.

Aus den Meßwerten der Sensoren 2, 3 und 4 wird durch Bildung des Quotienten

$$\frac{\textbf{Meßwert}}{\textbf{Nullwert}} = \textbf{RT}$$

die relative Transparenz RT ermittelt. Diese relative Transparenz ist dabei von einer eventuell vorhandenen Restverschmutzung der Wandung des Sedimentationsgefäßes unabhängig.

In den Fig. 1 und 1a sind mehrere ortsfeste Lichtschranken 5 - 2; 6 - 3 und 7 - 4 angeordnet. Es ist jedoch auch eine einzelne, in vertikaler Richtung bewegte Lichtschranke denkbar. Im Falle eines bewegten Lichtschrankens wird dieser - während des Meßzyklus - mehrmals über der Höhe des Sedimentationsgefäßes, mindestens im Bereich des Überstandes, bis zum Schlammspiegel verfahren ("Scannen") und auf diese Weise die Entwicklung der Transparenz mit der Zeit über der Höhe verfolgt.

Das Signal des zum Lichtschranken gehörigen Sensors wird als Funktion von Ort und Zeit registriert.

Wie bereits eingangs erwähnt, zeigten Beobachtungen des im Sedimentationsgefäß 1 sedimentierenden Klärschlammes eine wenige mm hohe Zone größerer Transparenz im Vergleich zur Transparenz in dem darüberstehenden "Klarwasser". Diese Zone bildet sich direkt oberhalb des Schlammspiegels aus.

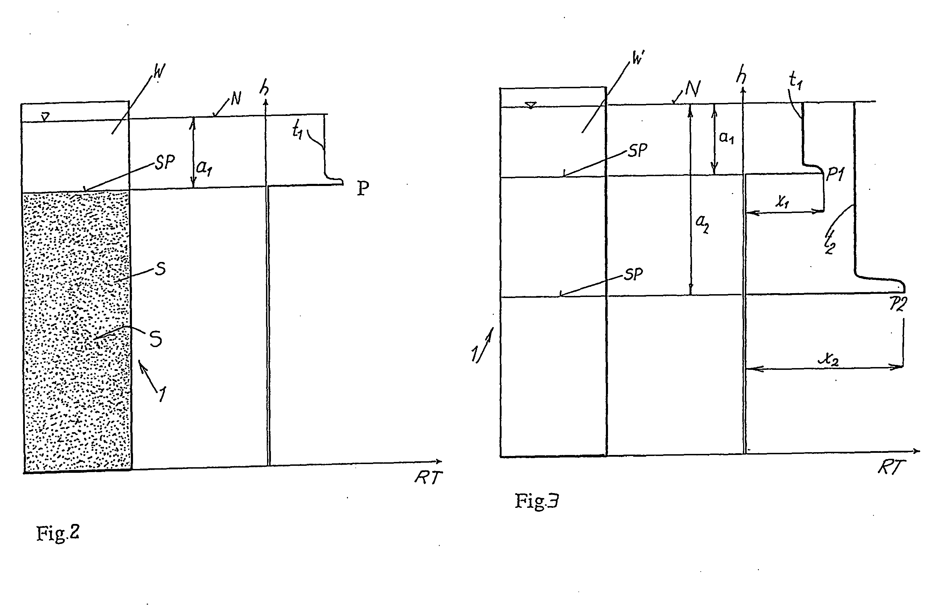

Fig. 2 zeigt nun die relative Transparenz RT in Abhängigkeit der Höhe des Sedimentationsgefäßes 1 zum Zeitpunkt t, wobei auch die Verhältnisse im Sedimentationsgefäß 1 dargestellt sind. Das Sedimentationsgefäß wurde zum Zeitpunkt $t_0$ bis zum Niveau N mit Belebtschlamm aus der Leitung 15 (Fig. 1) gefüllt. Nach einer bestimmten Zeitspanne t, hat sich der Schlammspiegel SP im Abstand a, unter dem Füllniveau N eingestellt. Zwischen dem Schlammspiegel SP und dem Füllniveau N befindet sich Klarwasser W, und zwischen dem Schlammspiegel SP und dem Boden des Sedimentationsgefäßes befindet sich Schlamm S.

Aus Fig. 2 ist die Zone erhöhter Transparenz unmittelbar über dem Schlammspiegel SP zu erkennen. Gemäß Fig. 2 befindet sich der Sensor, z.B. 2, im Abstand $a_1$, vom Füllniveau, und der Schlammspiegel erreicht zur Zeit $t_1$, den Sensor. In der Tiefe $a_1$, liegt der Peak.

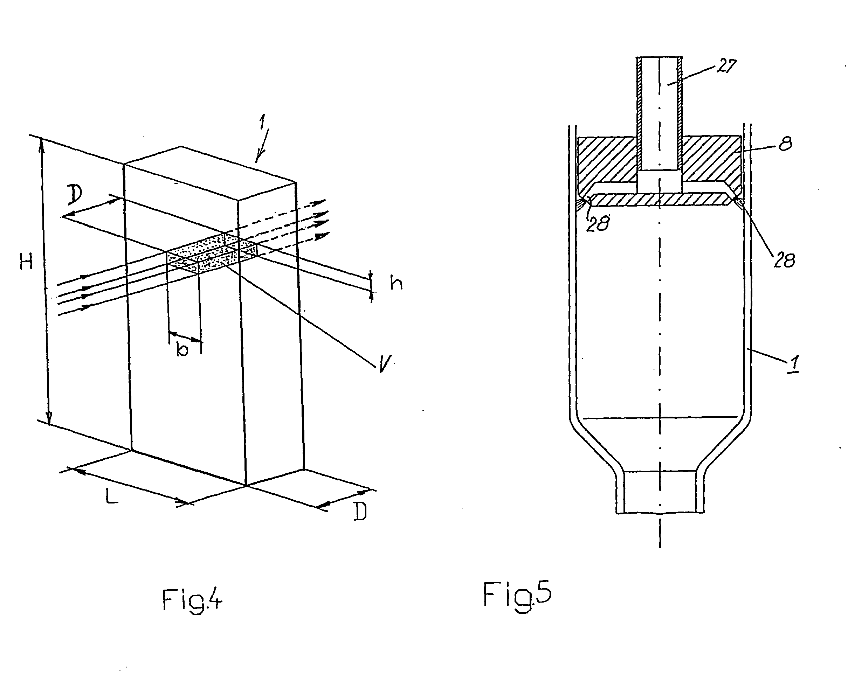

Nun ändert die transparente Zone im Verlauf des Absinkens des Schlammspiegels SP sowohl ihre Höhe als auch ihre Form, wie dies Fig. 3 erkennen läßt. Das Füllniveau ist wieder mit N bezeichnet. Zur Zeit t, befindet sich der Schlammspiegel SP im Abstand a, vom Füllniveau N. Zur Zeit tz hat der Schlammspiegel SP den Abstand $a_2$, vom Füllniveau N erreicht. Die transparente Zone, die sich a direkt über dem Schlammspiegel befindet, geht mit diesem im Laufe der Zeit nach unten. Dabei ändert sich die Transparenz dieser Zone. Diese Änderung ist durch das Maß "X" (Fig. 3) meßbar. Die Peaks sind mit P1 und P2 bezeichnet.

Die Ausbildung eines Peaks zeigt, daß die Schlammflocken einen Verband bilden, der als Tiefbettfilter wirkt und damit das Austreten von kleineren Partikeln aus dem Verband in das Klarwasser über dem Schlammspiegel verhindert. Die Eigenschaft der Schlammflocken, sich zu einem Verband zu verbinden, muß also in dem Zustand, den sie vor der Probennahme hatten, erhalten bleiben. Würde man den Schlamm pumpen, dann würde dadurch die zu messende Eigenschaft durch Zerstörung der Schlammflocken verändert. Erfindungsgemäßes Aufsaugen durch Unterdruck ist die schonendste Handhabung der Flocken. '

Für eine repräsentative Erfassung des Zustandes einer Suspension, in der sich einzelne Partikel bewegen, ist die Mittelwertbildung über ein gewisses Vohimen (Meßvolumen) vorzunehmen. Damit muß das Strahlenbündel nicht nur eine gewisse Höhe h, sondern auch eine gewisse Mindestbreite aufweisen. Die wirksame Länge des Strahles ist durch die Weite D des Sedimentationsgefäßes 1 gegeben, wie dies Fig. 4 erkennen läßt, in der das Sedimentationsgefäß 1 rechteckigen Querschnitt besitzt. Die Querschnittsabmessungen sind mit L und D bezeichnet, das Meßvolumen V ist in Fig. 4 schraffiert. Es ergibt sich aus der Höhe h des Strahlenbündels, der Weite D des Sedimentationsgefäßes 1 und der Breite b des Strahlenbündels das Meßvolumen V zu V = D . b . h.

**EP 1 060 132 B1**

Nach Fig. 6 besitzt das Sedimentationsgefäß 1 im Bereich des sich bildenden Überstandes eine Öffnung 30 bzw. ragt in das Sedimentationsgefäß 1 ein Entnahmerohr 29, mit welchem - nach Bildung eines klaren Überstandes - am besten zum Ende der Meßzeit je nach Separationsgeschwindigkeit 5 bis 120 Minuten) eine Probe für die Bestimmung der chemischen und physikalischen Eigenschaften des Überstandes entnommen werden kann. Zum Ende der Meßzeit können die Eigenschaften des Überstandes auch mittels Durchstrahlung oder mittels invasiven Sonden gemessen werden.

Was nun die Höhenlage der seitlichen Öffnung 30 bzw. der Öffnung des Entnahmerohres 29 anlangt, so sollen sich diese Öffnungen - bei möglichst allen Messungen - im Bereich des geklärten Überstandes befinden und nicht zu tief im Bereich des verdichteten Schlammes, oder an der Oberfläche, wo eventuell einige Schlammflocken schwimmen. Dies wird im allgemeinen erreicht, wenn die Öffnung 10 - 50, insbesondere 15 - 30 mm unter dem Wasserspiegel liegt. Das Entnahmerohr 29 hat gegenüber der seitlichen Öffnung 30 den Vorteil, daß sich darin kein Klärschlamm absetzen kann. Abgesetzter Klärschlamm kann zur Verstopfung oder Verschmutzung der nachgeschalteten Meßgeräte führen oder zumindest die vorzeitige Reinigung eines Filters erfordern.

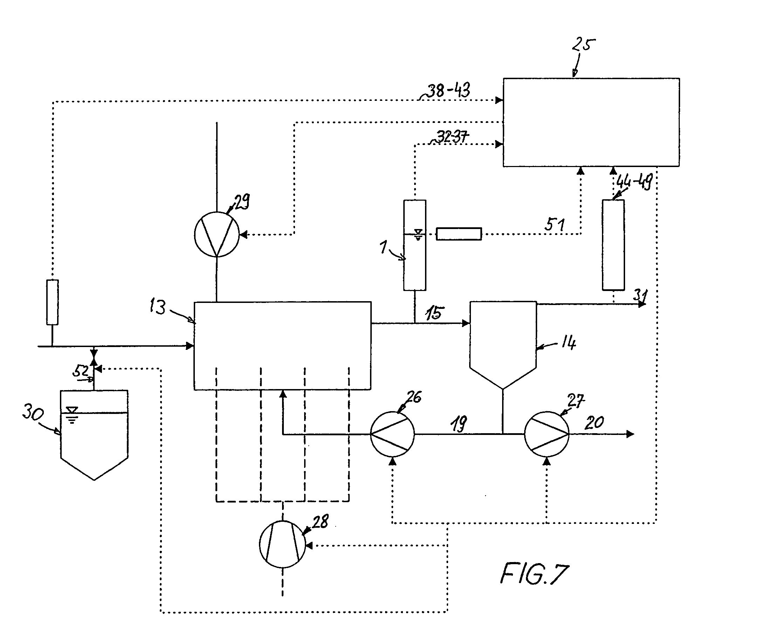

Das Blockschaltbild Fig. 7 zeigt im Zulauf das Ausgleichsbecken 30, das Belebungsbecken 13, und das Nachklärbecken 14, welches mittels Leitung 15 mit dem Belebungsbecken 13 verbunden ist. Aus der Leitung 15 wird eine repräsentative Probe in das Sedimentationsgefäß 1 gesaugt, wo die hier bereits beschriebenen Meßwerte bestimmt werden. Die Meßwerte

32 - für den TOC (Gesamtgehalt an organischem Kohlenstoff) im Überstand des sich absetzenden Belebtschlammes,

33 - für den CSB (chemischer Sauerstoffbedarf) im Überstand des sich absetzenden Belebtschlammes,

34- für Nitrat im Überstand des sich absetzenden Belebtschlammes,

35 - für Ammonium im Überstand des sich absetzenden Belebtschlammes,

36 für den pH-Wert im Überstand des sich absetzenden Belebtschlammes, und

37 - für Phosphat im Überstand des sich absetzenden Belebtschlammes, sowie der Transparenzmeßwert 51 gehen an eine Regeleinrichtung 25 (Computer), wo sie mit den Meßwerten

38 - für den TOC im Zulauf,

39 - für den CSB im Zulauf,

40 - für Nitrat im Zulauf,

41 - für Ammonium im Zulauf,

42 - für den pH-Wert im Zulauf, und

43 - für Phosphat im Zulauf, als den Zulauf charakterisierend sowie den den Ablauf charakterisierenden Meßwerten

44 - für den TOC im Ablauf,

45 - für den CSB im Ablauf,

46 - für Nitrat im Ablauf,

47 - für Ammonium im Ablauf,

48 - für den pH-Wert im Ablauf und

49 - für Phosphat im Ablauf,

verknüpft werden. Durch ein mechanistisches Regelmodell oder durch Variationsrechnung eines neuronalen Netzes wird die günstigste Kombination der Stellgrößen für die Pumpen 26 und 27, die die Schlammbewirtschaftung (Belebungsbecken 13 und Nachklärbecken 14) bewirken, den Verdichter 28, der die Belüftung im Belebungsbecken 13 versorgt und für den Zu- und Ablauf 52 zum und vom Ausgleichsbecken 30 errechnet.

Selbstverständlich ist es auch möglich, Additivzugaben, wie beispielsweise Nährstoffe, vor der Belebung und/ oder etwa mittels einer Pumpe 29 Fällungsmittel oder Flockungshilfsmittel anzusteuern. Dies alles ist nur dann sinnvoll, wenn es rechtzeitig geschieht, weshalb die Meßwerte frühzeitig verfügbar sein müssen und den Schlamm am Austritt aus dem Belebungsbecken 13 korrekt beschreiben müssen.

**Patentansprüche**

1.  Verfahren zur Regelung von biologischen Abwasserkläranlagen, insbesondere solchen mit Belebungsbecken und damit verbundenen Nachklärbecken, bei dem einem Sedimentationsgefäß Schlamm zugeführt und aus dem sich im Sedimentationsgefäß bildenden Überstand durch Transparenzmessung Meßdaten zur Regelung der Abwasserkläranlage ermittelt werden, **dadurch gekennzeichnet, daß** die Transparenz des Überstandes als Funktion der Zeit ermittelt wird und hiebei mindestens eine Lichtschranke eingesetzt wird, mit einem Strahlenbündel, das das Sedimentationsgefäß quer zur Sedimentationsrichtung durchsetzt, und einem Sensor, auf den das Strahlenbündel nach Durchsetzen der Küvette auftrifft, daß zur Ermittlung eines Peaks (abrupte Zu- und Abnahme der Transparenz)

im zeitlichen Verlauf der Sedimentation in der Küvette die Höhe des Strahlenbündels in Sedimentationsrichtung im Bereich von 0,2 bis 1,5 mm, vorzugsweise zwischen 0,3 und 0,5 mm liegt und die ermittelten Meßdaten zur Steuerung mindestens eines der folgenden Parameter eingesetzt werden: Schlammzufuhr, Belebt-Schlammrückführung aus dem Nachklärbecken, Sauerstoffzufuhr zum Belebtschlammbecken, Bewirtschaftung eines Zulauf-Ausgleichsbekkens, Dosierung von Zusatzstoffen, Denitrifikation, Dosierung von nicht kontinuierlich auftretenden Strömen, z.B. Grubenentleerung oder aus angeschlossenen Industriebetrieben oder rückgeführtes Wasser aus der Schlammpresse.

2. Verfahren nach Anspruch 1, **dadurch gekennzeichnet, daß** ein Strahlenbündel mit einer horizontalen Breite des Strahles zwischen 2 bis 20 mm, insbesondere zwischen 3 bis 15 mm, bei einem Querschnitt des Sedimentationsgefäßes von 5 bis 100 cm$^2$ , insbesondere 5-50 cm$^2$, eingesetzt wird.

3. Verfahren nach Anspruch 1 oder 2, **dadurch gekennzeichnet, daß** an Meßdaten zur Regelung der Abwasserkläranlage aus dem sich im Sedimentationsgefäß bildenden Überstand mindestens einer der folgenden Parameter: chemische Konzentrationen an Sauerstoff, Nitrat, Ammonium, Phosphat, physikalische Größen wie pH-Wert, Redoxpotential, Farbe, Summenparameter, wie chemischer Sauerstoffbedarf (CSB), biologischer Sauerstoffbedarf (BSB), Gesamtgehalt (TOC) an organischem Kohlenstoff entweder durch Probenziehen und Analyse dieser Probe oder durch Durchstrahlung des Sedimentationsgefäßes oder durch Messen in situ ermittelt wird.

4. Verfahren nach Anspruch 1 oder 2, **dadurch gekennzeichnet, daß** die Entwicklung der Transparenz im sich bildenden Überstand an mindestens einem Ort des Sedimentationsgefäßes als Funktion der Zeit gemessen wird.

5. Verfahren nach Anspruch 1 oder 2, **dadurch gekennzeichnet, daß** die Entwicklung der Transparenz im sich bildenden Überstand zu einer vorbestimmten Zeit als Funktion der Tiefe der Flüssigkeit im Sedimentationsgefäß gemessen wird.

6. Verfahren nach einem der Ansprüche 1 - 5, **dadurch gekennzeichnet, daß** dem Sedimentationsgefäß, Schlamm aus dem Überlauf des Belebungsbeckens, inbes. vor der Einmündung des Überlaufs in das Nachklärbecken, zugeführt wird.

7. Verfahren nach einem der Ansprüche 1-6, **dadurch gekennzeichnet, daß** als zusätzliche Meßwerte, den Zulauf zur Kläranlage und/oder den Ablauf aus der Kläranlage charakterisierende Größen ermittelt und ebenfalls zur Steuerung mindestens eines der in Anspruch 1 angeführten Parameter eingesetzt werden.

8. Verfahren nach einem der Ansprüche 1 - 7, **dadurch gekennzeichnet, daß** bei diskontinuierlichem Anlagenbetrieb der Schlamm zum Ende der Belüftungsperiode entnommen und dem Sedimentationsgefäß zugeführt wird.

9. Verfahren nach einem der Ansprüche 1 bis 8, **dadurch gekennzeichnet, daß** die ermittelten Meßdaten sowie die gegebenenfalls ermittelten Meßwerte aus dem Zu- und Ablauf aus der Kläranlage als elektrische Signale einem als wissensbasiertes, adaptives, mathematisches Modell ausgebildeten Regelalgorithmus einer Regeleinrichtung zugeführt werden, deren Ausgangsgröße zur Steuerung mindestens eines der in Anspruch 1 angeführten Parameter eingesetzt wird.

10. Verfahren nach Anspruch 9, **dadurch gekennzeichnet, daß** ein neuronales Netzwerk als mathematisches Modell eingesetzt wird.

11. Verfahren nach einem der Ansprüche 1 bis 10, **dadurch gekennzeichnet, daß** vor jedem Meßzyklus die Innenwand des Sedimentationsgefäßes durch Anstrahlen mit einem Reinigungsmedium, insbesondere Wasser, gereinigt und das Reinigungsmedium aus den Düsen eines vertikal über den von den Lichtschranken durchstrahlten Bereich bewegten Spülkopf gegen die Wand des Sedimentationsgefäßes gerichtet ist und das Reinigungsmedium am unteren Ende der Küvette abzogen wird.

12. Verfahren nach Anspruch 11, **dadurch gekennzeichnet, daß** bei jedem Meßzyklus das Sedimentationsgefäß nach der Reinigung und vor der Befüllung mit Schlamm, mit klarem Wasser befüllt und sodann die Lichtschranken kalibriert werden.

13. Verfahren nach einem der Ansprüche 1 bis 12, **dadurch gekennzeichnet, daß** der Schlamm in das Sedimentationsgefäß eingesaugt wird.

**14.** Verfahren nach einem der Ansprüche 3 bis 13, **dadurch gekennzeichnet, daß** durch eine seitliche Öffnung (30) in dem Sedimentationsgefäß (1) die Probe entnommen wird, wobei diese Öffnung (30) sich bevorzugt 10 bis 50, insbesondere 15 bis 30 mm unter dem Löffel (8) befindet (Fig. 6).

**15.** Verfahren nach einem der Ansprüche 3 sowie 6 bis 13, **dadurch gekennzeichnet, daß** nach Bildung eines klaren Überstandes die Probe über ein von oben in das Sedimentationsgefäß (1) ragendes und bevorzugt 10 bis 100 mm, insbesondere 15 bis 30 mm, unter den Flüssigkeitsspiegel reichendes Entnahmerohr (29) entnommen wird (Fig. 6).

**16.** Verfahren nach einem der Ansprüche 3 sowie 6 bis 13, **dadurch gekennzeichnet, daß** die Konzentration, oder eine physikalische Eigenschaft, z.B. Redoxpotential, mittels eines Sensors gemessen wird, der in den Überstand ragt und wobei das Sensorende sich bevorzugt 10 bis 50 mm, insbesondere 15 bis 30 mm unter dem Löffel (8) befindet.

**Claims**

**1.** A method of controlling biological sewage clarification plants, in particular those having activated-sludge tanks and secondary sedimentation tanks connected thereto, in which sludge is fed to a sedimentation vessel and, by transparency measurement, measurement data for controlling the sewage clarification plant are obtained from the supernatant liquid being formed in the sedimentation vessel, **characterised in that** the transparency of the supernatant liquid is determined as a function of time and at least one light barrier is used here, with a beam of light which passes through the sedimentation vessel transversely to the sedimentation direction, and with a sensor on which the beam of light is incident after passing through the test cell, **in that** to determine a peak (abrupt increase and decrease in transparency) in the course of the sedimentation time in the test cell the level of the beam of light in the sedimentation direction is in the range of 0.2 to 1.5 mm, preferably between 0.3 and 0.5 mm, and the measurement data determined are used to control at least one of the following parameters: sludge feed, activated-sludge recirculation from the secondary sedimentation tank, oxygen supply to the activated-sludge tank, managing an inflow-equalising tank, metering additives, denitrification, metering non-continuous flows, e.g. pit emptying or from associated industrial operations or recirculated water from the sludge press.

**2.** A method according to Claim 1, **characterised in that** a beam of light is used having a horizontal width of the beam of between 2 to 20 mm, in particular between 3 to 15 mm, for a cross-section of the sedimentation vessel of 5 to 100 cm$^2$, in particular 5 to 50 cm$^2$.

**3.** A method according to Claim 1 or 2, **characterised in that** measurement data for controlling the sewage clarification plant from the supernatant liquid being formed in the sedimentation vessel are used to determine at least one of the following parameters: chemical concentrations of oxygen, nitrate, ammonium, phosphate, physical variables such as pH value, redox potential, colour, summation parameters, such as chemical oxygen demand (COD), biological oxygen demand (BOD), total content (TOC) of organic carbon, either by sampling and analysis of these sample or by passing a beam through the sedimentation vessel or by measurement in situ.

**4.** A method according to Claim 1 or 2, **characterised in that** the development of the transparency in the supernatant liquid being formed is measured at at least one location of the sedimentation vessel as a function of time.

**5.** A method according to Claim 1 or 2, **characterised in that** the development of the transparency in the supernatant liquid being formed is measured at a predetermined time as function of the depth of liquid in the sedimentation vessel.

**6.** A method according to any one of Claims 1 to 5, **characterised in that** sludge from the overflow of the activated-sludge tank is fed to the sedimentation vessel, in particular upstream of the discharge of the overflow into the secondary sedimentation tank.

**7.** Method according to any one of Claims 1 to 6, **characterised in that**, as additional measured values, variables characterising the inflow into the clarification plant and/or the outflow from the clarification plant are determined and are also used to control at least one of the parameters mentioned in Claim 1.

**8.** Method according to any one of Claims 1 to 7, **characterised in that** with discontinuous plant operation the sludge is removed at the end of the aeration period and fed to the sedimentation vessel.

9. Method according to any one of the Claims 1 to 8, **characterised in that** the measurement data determined and the optionally determined measured values from the inlet and outlet from the clarification plant are fed as electrical signals to a control algorithm of a control device in the form of a knowledge-based, adaptive mathematical model, the output variable of said control device being used to control at least one of the parameters mentioned in Claim 1.

10. Method according to Claim 9, **characterised in that** a neuronal network is used as mathematical model.

11. Method according to any one of Claims 1 to 10, **characterised in that** before any measurement cycle the inner walls of the sedimentation vessel are cleaned by jetting with a cleaning medium, in particular water, and the cleaning medium is directed from the nozzles of a flushing head moved vertically over the zone through which the light barriers pass against the walls of the sedimentation vessel and the cleaning medium is removed at the lower end of the test cell.

12. Method according to Claim 11, **characterised in that** during each measurement cycle, after cleaning and before being filled with sludge, the sedimentation vessel is filled with clear water and then the light barriers are calibrated.

13. Method according to any one of Claims 1 to 12, **characterised in that** the sludge is sucked into the sedimentation vessel.

14. Method according any one of Claims 3 to 13, **characterised in that** the sample is taken through a lateral opening (30) in the sedimentation vessel (1), this opening (30) being situated preferably 10 to 50, in particular 15 to 30 mm below the ladle (8).

15. Method according any one of Claims 3 and 6 to 13, **characterised in that** after forming a clear supernatant liquid the sample is taken via a sampling pipe (29) (Fig. 6) projecting from above into the sedimentation vessel (1) and extending preferably 10 to 100 mm, in particular 15 to 30 mm, below the surface of the liquid.

16. Method according any one of Claims 3 and 6 to 13, **characterised in that** the concentration or a physical property, e.g. redox potential, is measured by means of a sensor which projects into the supernatant liquid and wherein the sensor end is situated preferably 10 to 50 mm, in particular 15 to 30 mm, below the ladle (8).

**Revendications**

1. Procédé destiné à la commande d'une station d'épuration biologique, en particulier celles pourvues d'une cuve d'épuration par boue activée et d'un bassin de décantation secondaire relié à celle-ci, dans lequel de la boue est introduite dans un récipient de sédimentation et, à partir de la phase liquide surnageante qui se forme dans le récipient de sédimentation, des données de mesure sont obtenues par mesure de la transparence, en vue de la commande de la station d'épuration, **caractérisé en ce que** la transparence de la phase liquide surnageante est transmise en tant que fonction du temps, et on utilise pour cela au moins une barrière lumineuse, avec un faisceau lumineux qui traverse le récipient de sédimentation perpendiculairement à la direction de sédimentation, et un capteur, que le faisceau lumineux rencontre après le passage à travers la cuvette, **en ce que**, en vue de la détermination d'un pic (augmentation et réduction brusques de la transparence) durant le déroulement dans le temps de la sédimentation dans la cuvette, la hauteur du faisceau lumineux dans la direction de sédimentation se situe dans l'intervalle entre 0,2 et 1,5 mm, de préférence entre 0,3 et 0,5 mm, et que les données de mesures obtenues sont utilisées pour la commande d'au moins l'un des paramètres suivants : alimentation en boue, recyclage de la boue activée à partir du bassin de décantation secondaire, alimentation en oxygène de la cuve d'épuration à boue activée, exploitation d'un bassin d'amenée et de commande, dosage d'additifs, dénitrification, dosage de flux survenant de manière non continue, par exemple vidange de fosse d'aisance ou à partir d'entreprises industrielles ou eaux recyclées à partir de la presse de boue.

2. Procédé selon la revendication 1, **caractérisé en ce qu'**on utilise un faisceau lumineux ayant une largeur horizontale de rayon comprise entre 2 et 20 mm, en particulier entre 3 et 15 mm, pour une section du récipient de sédimentation comprise entre 5 et 100 cm$^2$, en particulier entre 5 et 50 cm$^2$.

3. Procédé selon la revendication 1 ou 2, **caractérisé en ce que**, à partir de données de mesure, en vue de la commande de la station d'épuration à partir de la phase liquide surnageante formée dans le récipient de sédimentation, au moins un des paramètres suivants : concentration chimique d'oxygène, de nitrate, d'ammonium, de phosphate, dimensions physiques telles que la valeur du pH, le potentiel redox, la couleur, les paramètres des sommes, comme la demande chimique en oxygène (DCO), la demande biologique d'oxygène (DBO), la teneur totale en carbone organique (TCO), est obtenu au moyen d'un échantillonnage et de l'analyse de ces échantillons, au moyen d'une irradiation du récipient de sédimentation, ou au moyen d'une mesure in situ.

4. Procédé selon la revendication 1 ou 2, **caractérisé en ce que** le développement de la transparence dans la phase liquide surnageante se formant est mesuré au niveau d'au moins un emplacement du récipient de sédimentation en tant que fonction du temps.

5. Procédé selon la revendication 1 ou 2, **caractérisé en ce que** le développement de la transparence dans la phase liquide surnageante se formant à un moment prédéterminé est mesuré en tant que fonction de la profondeur du liquide dans le récipient de sédimentation.

6. Procédé selon les revendications 1 à 5, **caractérisé en ce que** la boue, provenant du trop-plein de la cuve d'épuration par boue activée, en particulier avant l'entrée du trop-plein dans le bassin de décantation secondaire, est introduite dans le récipient de sédimentation.

7. Procédé selon les revendications 1 à 6, **caractérisé en ce que** les dimensions caractérisant l'alimentation vers la station d'épuration et/ou l'évacuation à partir de la station d'épuration sont obtenues en tant que données de mesure supplémentaires, et **en ce que** les mesures supplémentaires sont utilisée pour la commande d'au moins l'un des paramètres décrits dans la revendication 1.

8. Procédé selon les revendications 1 à 7, **caractérisé en ce que**, lors d'un fonctionnement discontinu de la station, la boue est retirée à la fin de la période d'aérage et alimentée dans le récipient de sédimentation.

9. Procédé selon les revendications 1 à 8, **caractérisé en ce que** les données de mesure obtenues, tout comme les données de mesure éventuellement obtenues, à partir de l'entrée et de la sortie de la station d'épuration, sont entrées en tant que signaux électriques dans un algorithme d'un dispositif de réglage, développé comme un modèle basé sur la connaissance, adaptatif et mathématique, et dont la grandeur de sortie est utilisée pour la commande d'au moins l'un des paramètres décrits dans la revendication 1.

10. Procédé selon la revendication 9, **caractérisé en ce qu'**un réseau neuronal est utilisé en tant que modèle mathématique.

11. Procédé selon l'une des revendications 1 à 10, **caractérisé en ce que** la paroi intérieure du récipient de sédimentation est nettoyée, avant chaque cycle de mesure, par projection d'un moyen de nettoyage, en particulier de l'eau, et que le moyen de nettoyage est dirigé, à partir des buses d'une tête d'injection déplacée verticalement a travers de la zone irradiée par les barrières lumineuse, contre la paroi du récipient de sédimentation, et que le moyen de nettoyage est prélevé à l'extrémité inférieure de la cuvette.

12. Procédé selon la revendication 11, **caractérisé en ce que** le récipient de sédimentation est rempli d'eau claire à chaque cycle de mesure, après le nettoyage et avant le remplissage avec de la boue, et qu'alors les barrières lumineuses sont calibrées.

13. Procédé selon l'une des revendications 1 à 12, **caractérisé en ce que** la boue est aspirée dans le récipient de sédimentation.

14. Procédé selon l'une des revendications 1 à 13, **caractérisé en ce que** l'échantillon est prélevé par une ouverture latérale (30) dans le récipient de sédimentation (1), cette ouverture (30) se situant de préférence entre 10 et 50, en particulier entre 15 et 30 mm au-dessous de la cuillère (8) (figure 6).

15. Procédé selon l'une des revendications 3, tout comme 6 à 13, **caractérisé en ce que** l'échantillon est prélevé, après formation d'une phase liquide surnageante claire, au moyen d'un tube de prélèvement (29), faisant saillie depuis le haut dans le récipient de sédimentation (1) et se s'étendant de préférence de 10 à 100 mm, en particulier de 15 à 30 mm au-dessous de la surface du liquide (figure 6).

16. Procédé selon l'une des revendications 3, ainsi que 6 à 13, **caractérisé en ce que** la concentration, ou une caractéristique physique, par exemple le potentiel redox, est mesurée à l'aide d'un capteur, lequel pénètre dans la phase liquide surnageante, l'extrémité du capteur se situant de préférence de 10 à 50 mm, en particulier de 15 à 30 mm au-dessous de la cuillère (8).

Fig.1

Fig.1a

Fig.2

Fig.3

EP 1 060 132 B1

Fig.5

Fig.4

20

FIG.6

FIG.7